# EUROPÄISCHE PATENTSCHRIFT

(11) **EP 4 295 254 B1**
(45) Veröffentlichungstag und Bekanntmachung des Hinweises auf die Patenterteilung: **29.04.2026**
(21) Anmeldenummer: 22716052.0
(22) Anmeldetag: 17.03.2022
(51) Int. Cl.: G06F 21/52, G06F 21/55

(54) **VERFAHREN ZUR ÜBERWACHUNG VON CONTAINERANWENDUNGEN AUF EINEM HOSTSYSTEM AUF MANIPULATION UND ANLAGE**
METHOD FOR MONITORING CONTAINER APPLICATIONS ON A HOST SYSTEM AND INSTALLATION
PROCÉDÉ DE SURVEILLANCE DE CONTENEURS DANS UN SYSTÈME HÔTE ET INSTALLATION

(30) Priorität: 31.03.2021 EP 21166362
(43) Veröffentlichungstag der Anmeldung: 27.12.2023
(73) Patentinhaber: Siemens Aktiengesellschaft, 80333 München (DE)
(72) Erfinder: BENDT, Roman, 81375 München (DE); FALK, Rainer, 85435 Erding (DE); FEIST, Christian Peter, 80689 München (DE); FRIEDRICH, Daniela, 81827 München (DE); KNIERIM, Christian, 81373 München (DE); PYKA, Stefan, 85570 Markt Schwaben (DE); WEBER, Ricarda, 85716 Unterschleissheim (DE)
(74) Vertreter: Siemens Patent Attorneys
(86) Internationale Anmeldenummer: PCT/EP2022/057031
(87) Internationale Veröffentlichungsnummer: WO 2022/207347

(56) Entgegenhaltungen:
- EP-A1- 3 451 576
- MORADI FARNAZ ET AL: "ConMon: An automated container based network performance monitoring system", 2017 IFIP/IEEE SYMPOSIUM ON INTEGRATED NETWORK AND SERVICE MANAGEMENT (IM), IFIP, 8 May 2017 (2017-05-08), pages 54 - 62, XP033127547, DOI: 10.23919/INM.2017.7987264
- "Developing multi-agent systems with Jade", 1 January 2007, WILEY, GB, ISBN: 978-0-470-05747-6, article FABIO LUIGI BELLIFEMINE ET AL: "Chapter 3 to 5", pages: 29 - 114, XP055320966

## Beschreibung

Die Erfindung betrifft ein Verfahren zur Überwachung von Containeranwendungen auf einem Hostsystem auf Manipulation sowie eine Anlage.

Viele neue industrielle und nicht-industrielle IT-Systeme werden dergestalt entwickelt, dass sie flexibel an neuartige Anforderungen angepasst werden können. Ein gängiger Ansatz dazu ist die Bereitstellung einer Container-Technologie im IT-System und die Möglichkeit, neue oder geänderte Softwarelösungen mit Hilfe der Container-Technologie als Containeranwendungen schnell und flexibel in die IT-Systeme nachzuladen.

Solche Containeranwendungen können dabei auf vorab bekannten oder unbekannten Zielsystemen, welche auch als Hostsysteme bezeichnet werden, ausgeführt werden. Weiterhin ist das Ausführen von Containeranwendungen unterschiedlicher Anbieter auf demselben System möglich. Diese Flexibilität durch einfach nachladbare Containeranwendungen bringt die Bedrohung mit sich, dass auch manipulierte oder bösartige Containeranwendungen ins System eingebracht werden und dieses kompromittieren können.

Zum Schutz vor Manipulation werden Containeranwendungen häufig mittels auf dem Host verfügbarer Security-Mechanismen isoliert, insbesondere mittels Virtualisierungs-Mechanismen wie Linux Namespaces, chroot oder Hypervisor oder mittels Zugriffskontrollmechanismen wie einem Nutzerrechtemanagement, SELinux, SMACK oder AppArmor. Zum anderen ist es wichtig, den Security-Status, z.B. die Integrität der verwendeten Software- oder Konfigurationskomponenten und das Verhalten der nachgeladenen Containeranwendungen während der Laufzeit zu überwachen, um Manipulationen oder auffälliges Verhalten der Containeranwendungen frühzeitig festzustellen und folglich die Integrität des Hostsystems dauerhaft gewährleisten zu können. Diese Überwachung muss jedoch selbst verlässlich funktionieren, um eine Integritätsverletzung zuverlässig erkennen zu können. Allerdings bilden bekannte Überwachungslösungen eine zentrale Instanz, die Angreifer mit entsprechendem Aufwand deaktivieren oder anderweitig manipulieren können.

Es besteht daher ein Bedarf an einer verbesserten Lösung zur Überwachung von Containeranwendungen auf Manipulation. Insbesondere sollen die Zuverlässigkeit und Manipulationssicherheit der Überwachung verbessert werden.

Es sind Lösungen für die Überwachung von Containeranwendungen bekannt, welche Enforcer oder MicroEnforcer, etwa des Unternehmens AquaSec (https://www.aquasec.com/news/aqua-3-0-delivers-runtime-security-for-zero-infrastructure-containeras-a-service-environments/), einsetzen. Weitere Lösungen für das Überwachen von Containeranwendungen werden z.B. von Anbietern wie NeuVector (https://neuvector.com/) oder Sysdig (https://sysdig.com/) bereitgestellt. Hierbei werden typischerweise ein oder mehrere Container auf schadhaftes Verhalten (unautorisierte Netzwerkzugriffe oder Verwendung bestimmter Kommandos/Systemaufrufe) überwacht. Bekannt sind zudem allgemeine Überwachungssysteme zur Integritätsüberwachung wie z.B. Wazuh (www.wazuh.com), OSSEC (www.ossec.net), Nagios (www.nagios.org) Tripwire (www.tripwire.org) und Falco (www.falco.org). Diese Lösungen unterstützen unter anderem die Erkennung nicht legitimer Prozesse, unzulässige Modifikation von Dateien, Schreibzugriffe oder Aufbau oder Nutzung von Netzwerkverbindungen durch Prozesse. Werden nicht autorisierte Ereignisse bzw. Abweichungen gegenüber einer Referenz, erkannt, wird ein Alarm, z.B. in Form einer Lognachricht, generiert. Der Artikel "ConMon: An automated container based network performance monitoring system" von Moradi Farnaz et Al. veröffentlicht am 08-05-2017 beschreibt eine dezentralisierte Überwachung der Netzwerkperformance von Containeranwendungen. Das Buch "Developing multi-agent systems with Jade", ISBN 978-0-470-05747-6, beschreibt JADE, eine dezentrale Überwachung von Containeranwendungen. EP3451576 beschreibt eine eine blockchain-basierte Manipulationserkennung von Containeranwendungen.

Vor diesem Hintergrund ist es daher eine Aufgabe der Erfindung, ein verbessertes Verfahren zur Überwachung von Containeranwendungen auf einem Hostsystem auf Manipulation bereitzustellen. Ferner ist es eine Aufgabe der Erfindung, eine verbesserte Anlage zu schaffen, mit der ein solch verbessertes Verfahren ausführbar ist.

Diese Aufgaben der Erfindung werden mit einem Verfahren mit den in Anspruch 1 angegebenen Merkmalen sowie mit einer Anlage mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem Verfahren zur Überwachung von Containeranwendungen auf einem Hostsystem wird zu mindestens zweien der Containeranwendungen jeweils ein Überwachungsprozess auf dem Hostsystem gestartet und, vorzugsweise mittels einer datentechnischer Verknüpfung, zugeordnet, wobei die Überwachungsprozesse das aktuelle Verhalten mindestens einer anderen der Containeranwendungen als der jeweils zugeordneten Containeranwendung mit einem Referenzverhalten der mindestens einen anderen Containeranwendung einem Vergleich unterziehen. Das erfindungsgemäße Verfahren dient zur Überwachung von Containeranwendungen auf Manipulation und/oder zur Überwachung von Containeranwendungen auf Manipulationsversuche. Die Zuordnung des Überwachungsprozesses zu einer Containeranwendung mittels einer datentechnischen Verknüpfung kann in einer bevorzugten Weiterbildung der Erfindung insbesondere dadurch erfolgen, dass der Überwachungsprozess Zugriff auf eine, vorzugsweise vom Hostsystem verwaltete, Ressource der Containeranwendung erhält. Dazu kann der Überwachungsprozess insbesondere einen Datei-Handle (engl.: "*file handle*") und/oder einen Pointer und/oder einen Link und/oder einen Schlüssel (engl.: *"key"* oder *"magic number"*) oder eine sogenannte Capability verwenden, um auf die von einem Hostsystem verwaltete Ressource der zugeordneten Containeranwendung zuzugreifen. Der Überwachungsprozess verfügt dabei über einen Link oder eine Referenz auf die Ressource der zugeordneten Containeranwendung. Bei der Ressource handelt es sich bevorzugt um eine Interprozesskommunikations-Ressource und/oder einen gemeinsamen Speicherbereich (engl.: "*shared memory*") und/oder eine Pipe und/oder eine Nachrichtenwarteschlange und/oder einen Socket und/oder einen Namensraum (engl.: "*name space*"), und/oder eine Kontrollgruppe (engl: "*control group*") handeln. Der Überwachungsprozess hat dabei vorzugsweise zumindest lesenden Zugriff auf die vom Betriebssystem verwaltete Ressource der zugeordneten Container-Anwendung. Mittels der von einem Betriebssystem verwalteten Ressource kann der Überwachungsprozess insbesondere eine vom aktuellen Verhalten der Container-Anwendung abhängige Laufzeitintegritäts-Überwachungsinformation der zugeordneten Containeranwendung ermitteln und mit einer Referenzinformation der zugeordneten Containeranwendung überprüfen. Bei dem Verfahren gemäß der Erfindung kann also eine Überwachung der mindestens einen anderen als der jeweils zugeordneten Containeranwendung durch den der Containeranwendung zugeordneten Überwachungsprozess auch indirekt erfolgen. Dabei kann deren aktuelles Verhalten dadurch überprüft werden, dass deren Interaktion mit der dem Überwachungsprozess zugeordneten Containeranwendung mit der mindestens einen anderen Containeranwendung durch den Überwachungsprozess ermittelt und auf Übereinstimmung mit dem Referenzverhalten der mindestens einen anderen Containeranwendung verglichen wird. Es erfolgt dabei also eine indirekte Überwachung der anderen Containeranwendung. Insbesondere kann durch anhand der Interaktion ermittelt werden, ob die andere Containerüberwachung durch einen ihr zugeordneten Überwachungsprozess überwacht wird. Weiterhin kann die andere Containeranwendung oder der dieser zugeordnete andere Überwachungsprozess der Containeranwendung eine Überwachungsinformation explizit bereitstellen, die vom dem dieser Containeranwendung zugeordneten Überwachungsprozess überprüft werden kann.

Es versteht sich, dass unter einer zu einem Überwachungsprozess zugeordneten Containeranwendung diejenige Containeranwendung zu verstehen ist, der der Überwachungsprozess jeweils zugeordnet ist. Zweckmäßig sind unterschiedlichen Containeranwendungen jeweils unterschiedliche, d. h. nichtidentische, Überwachungsprozesse zugeordnet.

Mittels des erfindungsgemäßen Verfahrens werden Containeranwendungen also nicht mittels einer zentralen Komponente überwacht, sondern es werden dezentrale Überwachungsprozesse gestartet und den jeweiligen Containeranwendungen zugeordnet. Die Überwachungsprozesse sind ausgebildet und eingerichtet, das aktuelle Verhalten mindestens einer anderen Containeranwendung zu erfassen und mit einem Referenzverhalten der mindestens einen anderen Containeranwendung einem Vergleich zu unterziehen. Auf diese Weise werden mindestens zwei Containeranwendungen von mindestens zwei Überwachungsprozessen überwacht. Folglich genügt es für einen Angreifer nicht, einen einzigen zentralen Überwachungsprozess zu manipulieren, um Containeranwendungen manipulieren zu können, sondern es müssen mindestens zwei Überwachungsprozesse kompromittiert werden, um die Containeranwendungen manipulieren zu können. Besonders bevorzugt wird jeder der Containeranwendungen jeweils ein unterschiedlicher, d. h. ein eigener, Überwachungsprozess zugeordnet. D. h. Überwachungsprozesse werden jeweils lediglich einer einzigen der Containeranwendungen, und nicht mehreren Containeranwendungen, zugeordnet. Bevorzugt werden nicht allein mindestens zweien der Containeranwendungen jeweils ein Überwachungsprozess zugeordnet, sondern drei oder vier oder mehreren Containeranwendungen wird jeweils ein eigener Überwachungsprozess zugeordnet. Je mehr Überwachungsprozesse vorhanden sind, umso schwieriger wird es für einen Angreifer, alle Überwachungsprozesse individuell zu manipulieren. Bevorzugt sind alle Überwachungsprozesse eingerichtet, das aktuelle Verhalten mindestens zweier, vorzugsweise dreier oder mehrerer oder sämtlicher, anderer der Containeranwendungen als der jeweils zugeordneten Containeranwendung mit einem Referenzverhalten der mindestens einen anderen Containeranwendung einem Vergleich zu unterziehen. Folglich wird mittels der Überwachungsprozesse nicht allein eine einzelne Containeranwendung überwacht, sondern es können mehrere oder sämtliche der auf den Hostsystem laufenden Containeranwendungen überwacht werden. Dies erhöht die Sicherheit des Hostsystems mit auf ihm laufenden Containeranwendungen deutlich.

Vorteilhaft wird bei dem erfindungsgemäßen Verfahren abhängig von dem Vergleich auf eine erfolgte oder nicht erfolgte Manipulation der dem Vergleich unterzogenen mindestens einen Containeranwendung geschlossen. Insbesondere wird bevorzugt auf eine erfolgte oder nicht erfolgte Manipulation je einer oder jeder der mehreren oder sämtlichen der dem Vergleich unterzogenen mindestens einen Containeranwendung geschlossen, d. h. das Schließen auf eine erfolgte oder nicht erfolgte Manipulation erfolgt vorzugsweise für jeweils je eine oder jede der mindestens einen Containeranwendung. Auf diese Weise können vorteilhaft einzelne manipulierte Containeranwendungen identifiziert werden. Ergibt der Vergleich eine Abweichung zwischen dem Verhalten der Containeranwendung und dem Referenzverhalten, so wird auf eine erfolgte Manipulation der Containeranwendung geschlossen. Daraufhin kann eine Alarmmeldung oder ein Alarmsignal bereitgestellt werden und/oder es kann eine Netzwerkkommunikation der betroffenen Containeranwendung oder des Hosts begrenzt werden und/oder es kann der Zugriff auf eine Ein-/Ausgabeschnittstelle des Hosts durch die betroffenen Containeranwendung gesperrt oder allgemein gesperrt werden, und/oder es kann die betroffene Containeranwendung angehalten oder beendet oder neu gestartet werden. Weiterhin ist es in einer Weiterbildung der Erfindung möglich, dass ein Neustart des Programmcodes, d. h. des Container-Images, der betroffenen Containeranwendung auf dem Host gesperrt wird. Vorzugsweise wird bei dem erfindungsgemäßen Verfahren dann, wenn auf eine erfolgte Manipulation der mindestens einen Containeranwendung geschlossen wird, eine Alarmmeldung oder ein Alarmsignal bereitgestellt und/oder es wird eine Netzwerkkommunikation der betroffenen mindestens einen Containeranwendung oder des Hosts begrenzt und/oder es wird der Zugriff auf eine Ein-/Ausgabeschnittstelle des Hosts durch die betroffene mindestens eine Containeranwendung gesperrt oder allgemein gesperrt, und/oder es wird die betroffene mindestens eine Containeranwendung angehalten oder beendet oder neu gestartet und/oder es wird ein Neustart eines Programmcodes, d. h. eines Container-Images, der betroffenen mindestens einen Containeranwendung auf dem Host gesperrt.

Zweckmäßig wird bei dem Verfahren gemäß der Erfindung das Referenzverhalten der Containeranwendung den Überwachungsprozessen beim Start und/oder Stopp und/oder bei einer Änderung der mindestens einen anderen Containeranwendung mitgeteilt, d. h. es wird eine Information über das Referenzverhalten übermittelt. Auf diese Weise kann flexibel auf neu gestartete und/oder geänderte und/oder gestoppte Containeranwendungen reagiert werden. Vorzugsweise wird das Referenzverhalten einer gestoppten Containeranwendung nicht weiter berücksichtigt. Vorzugsweise wird das Referenzverhalten bei neu gestarteten Containeranwendungen ergänzt und das Referenzverhalten wird zweckmäßig bei geänderten Containeranwendungen angepasst.

In einer vorteilhaften Weiterbildung des erfindungsgemäßen Verfahrens wird der Überwachungsprozess der jeweiligen Containeranwendung zugeordnet, indem der Überwachungsprozess als Teil der jeweiligen Containeranwendung gestartet wird. Besonders bevorzugt sind den mindestens zwei Containeranwendungen die Überwachungsprozesse derart zugeordnet, dass die Überwachungsprozesse jeweils Teil einer der mindestens zwei Containeranwendungen sind. Auf diese Weise wird der Überwachungsprozess jeweils automatisch mit dem Starten der Containeranwendung initialisiert. Mittels des gemeinsamen Startens von Containeranwendung und Überwachungsprozess wird in dieser Weiterbildung der Erfindung der Überwachungsprozess automatisch der jeweiligen Containeranwendung zugeordnet, indem das Hostsystem den Überwachungsprozess notwendig als Teil der Containeranwendung registriert und verwaltet und den Überwachungsprozess kontinuierlich der Containeranwendung intern zuordnet. Der Überwachungsprozess kann insbesondere ein Betriebssystemprozess sein. In dieser Weiterbildung lässt sich die Erfindung auch als Verfahren zur Überwachung von Containeranwendungen auf einem Hostsystem angeben, bei welchem bei mindestens zweien der Containeranwendungen jeweils ein Überwachungsprozess auf dem Hostsystem als Teil der jeweiligen Containeranwendung gestartet wird, wobei die Überwachungsprozesse das aktuelle Verhalten mindestens einer anderen der Containeranwendungen als der Containeranwendung, deren Teil sie jeweils sind, mit einem Referenzverhalten der mindestens einen anderen Containeranwendung einem Vergleich unterziehen.

Bei dem Verfahren wird in einer bevorzugten Weiterbildung der Erfindung das aktuelle Verhalten der mindestens einen anderen Containeranwendung mit dem Referenzverhalten einem Vergleich hinsichtlich eines Antwortverhaltens auf eine Anfrage, d. h. eine Anfragenachricht, und/oder hinsichtlich eines Betriebsverhaltens und/oder hinsichtlich eines Verhaltens bei einem Manipulationsversuch und/oder bei einer erfolgten Manipulation unterzogen.

Vorzugsweise teilt bei dem erfindungsgemäßen Verfahren eine Referenzverhaltenskomponente den Überwachungsprozessen das Referenzverhalten mit. Die Referenzverhaltenskomponente kann vorteilhaft als zentrale Komponente vorgesehen sein. In dieser Weiterbildung der Erfindung ist die Referenzverhaltenskomponente einfach und zuverlässig administrierbar. Alternativ und ebenfalls vorteilhaft kann die Referenzverhaltenskomponente, zweckmäßig redundant, zumindest zwei oder mehreren Containeranwendungen jeweils zugeordnet werden oder Teil der zwei oder mehreren Containeranwendungen sein.

Bevorzugt ist bei dem Verfahren gemäß der Erfindung die Referenzverhaltenskomponente kryptographisch geschützt. In dieser Weiterbildung ist die Referenzverhaltenskomponente ihrerseits besonders gegen Manipulation geschützt. Dabei kann eine von der Referenzverhaltenskomponente verwendete Referenzinformation bevorzugt kryptographisch geschützt sein, vorzugsweise verschlüsselt und/oder durch eine kryptographische Prüfsumme geschützt. Alternativ oder zusätzlich und ebenso vorteilhaft kann der Programmcode der Referenzverhaltenskomponente verschlüsselt oder durch eine kryptographische Prüfsumme geschützt sein, oder er kann in obfuszierter Form vorliegen. Weiterhin bevorzugt kann die Referenzverhaltenskomponente eine Selbstintegritätsüberwachungskomponente umfassen, die die Integrität der Referenzverhaltenskomponente zur Laufzeit überwacht.

Zweckmäßig wird bei dem erfindungsgemäßen Verfahren in einer Weiterbildung der Erfindung die Referenzverhaltenskomponente mittels einer verteilten Datenbank realisiert. Vorteilhaft ist in dieser Weiterbildung der Erfindung die Referenzverhaltenskomponente nicht als zentrale und daher potenziell einfacher manipulierbare Komponente vorgesehen, sondern die Referenzverhaltenskomponente ist als verteilte Datenbank deutlich schwerer zu manipulieren. Denn eine Manipulation zumindest eines überwiegenden Teils der verteilten Datenbank oder der vollständigen verteilten Datenbank wäre in dieser Weiterbildung der Erfindung eine Voraussetzung für eine Manipulation der Referenzverhaltenskomponente. Die verteilte Datenbank kann als eine Distributed-Leger-Datenbank oder als eine Blockchain-Datenbank realisiert sein, bei der ein Datensatz durch einen Block einer Blockkette kryptographisch geschützt bestätigt ist. Neben der Referenzverhaltenskomponente kann auch die Überwachungsinformation eines Containers in einer verteilten Datenbank einem oder mehreren Überwachungsprozess en zur Prüfung bereitgestellt. In einer weiteren Variante kann der Überwachungsprozess durch einen Smart-Contract-Programmcode der verteilten Datenbank realisiert sein.

Die erfindungsgemäße Anlage weist Containerimages für Containeranwendungen und ein Hostsystem auf und ist ausgebildet zur Ausführung eines erfindungsgemäßen Verfahrens wie vorhergehend beschrieben.

Die Anlage ist in einer vorteilhaften Weiterbildung der Erfindung eine Fertigungs- und/oder Bearbeitungsanlage, vorzugsweise eine Werkzeugmaschine, ein führerloses Transportsystem oder ein Roboter.

Nachfolgend wird die Erfindung anhand in der Zeichnung dargestellter Ausführungsbeispiele näher erläutert.

Die einzige Zeichnungsfigur 1 zeigt eine erfindungsgemäße Anlage mit einem Hostsystem zur Ausführung eines erfindungsgemäßen Verfahrens zur Überwachung von Containeranwendungen auf einem Hostsystem schematisch in einer Prinzipskizze.

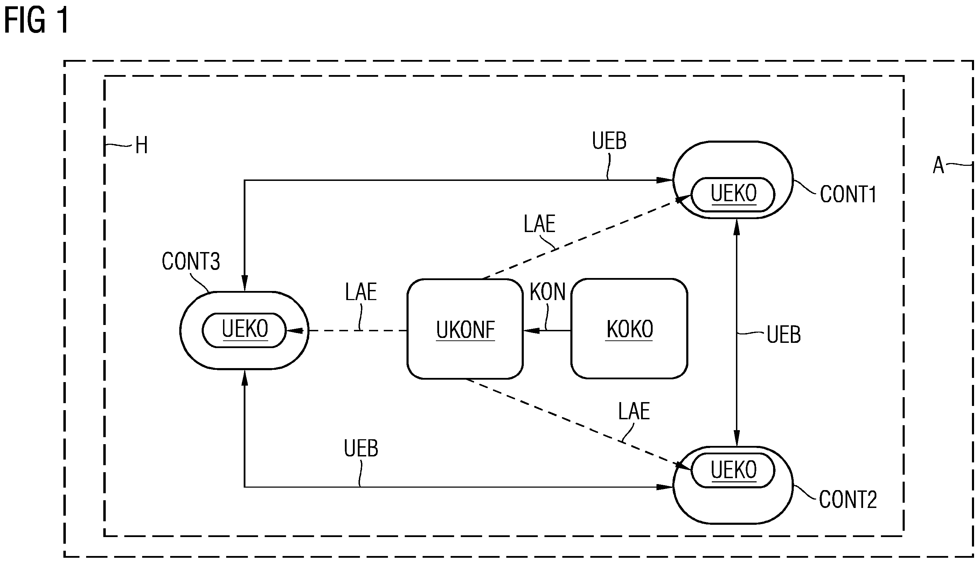

Auf dem Hostsystem H der in Fig. 1 dargestellten erfindungsgemäßen Anlage A wird eine Container-Laufzeitumgebung gestartet. Innerhalb der Container-Laufzeitumgebung werden mittels Containerimages Containeranwendungen CONT1, CONT2, CONT3 gestartet. Anders als im Stand der Technik bekannt, werden bei dem auf dem Hostsystem H ausgeführten erfindungsgemäßen Verfahren die Containeranwendungen CONT1, CONT2, CONT3 nicht mittels einer zentralen Überwachungskomponente auf Manipulation und auf Manipulationsversuche überwacht. Stattdessen wird mittels des erfindungsgemäßen Verfahrens eine dezentrale Überwachung der Containeranwendungen CONT1, CONT2, CONT3 durchgeführt. Erfindungsgemäß wird im dargestellten Ausführungsbeispiel die Überwachung der Containeranwendungen CONT1, CONT2, CONT3 wechselseitig durch die Containeranwendungen CONT1, CONT2, CONT3 selbst durchgeführt. Auf dem erfindungsgemäßen Hostsystem werden zunächst für die Container-Laufzeitumgebung alle üblichen und an sich bekannten Härtungsmaßnahmen durchgeführt, hier eine verpflichtende Zugangskontrolle (Mandatory Access Control), eine Kontrolle der Namespaces sowie eine Einschränkung der Berechtigungen der Containeranwendungen CONT1, CONT2, CONT3 und/oder Einschränkung der Kommunikation, etwa mittels Calico oder anderen an sich bekannten SDN-Lösungen (SDN = engl.*"Software Defined Networking*"). Mittels der Härtungsmaßnahmen können Containeranwendungen CONT1, CONT2, CONT3 auf dem Hostsystem H keine sensiblen Daten von anderen Containeranwendungen CONT1, CONT2, CONT3 einsehen.

Auf dem Hostsystem H ist eine Konfigurationskomponente KOKO implementiert, die eine Überwachungs-Konfigurations-Information UKONF zu einer aktuell aktiven Laufzeitkonfiguration bereitstellt, d.h. zu einer Konfiguration aktuell ausgeführter Containeranwendungen. Diese Konfigurationskomponente KOKO kann beispielsweise die Container-Laufzeitumgebung selbst sein oder eine davon unabhängige Konfigurationskomponente KOKO und bildet eine Referenzverhaltenskomponente im Sinne der vorliegenden Erfindung.

Die Überwachungs-Konfigurations-Information UKONF beinhaltet einen Satz von Referenzwerten für die Überwachung. Diese Referenzwerte beinhalten im dargestellten Ausführungsbeispiel Angaben über die Art und die Anzahl der laufenden Containeranwendungen und Prüfsummen der laufenden Containeranwendungen sowie Angaben über Rechte der Containeranwendungen und Angaben über zulässige Netzwerk-Aktivitäten der Containeranwendungen sowie Angaben über maximale Beanspruchung von Ressourcen wie CPU-Zeit oder RAM durch die laufenden Containeranwendungen. In weiteren, nicht eigens dargestellten Ausführungsbeispielen können weitere Überwachungs-Konfigurations-Informationen hinzutreten oder fehlen.

Die zur jeweiligen Containeranwendung gehörende Überwachungs-Konfigurations-Information UKONF kann entweder von der Konfigurations-Komponente KOKO selbst festgelegt oder berechnet werden oder sie kann bereits im Containerimage enthalten sein. Beispielsweise kann das Containerimage eine Vorgabe enthalten, wie viele Netzwerk-Ressourcen oder CPU-Ressourcen die Containeranwendungen CONT1, CONT2, CONT3 jeweils benötigen. Diese Vorgaben im Containerimage werden von der Konfigurationskomponente KOKO überprüft und entweder akzeptiert und in die Überwachungs-Konfigurations-Information UKONF übernommen oder abgelehnt. Im letzten Fall wird ein Start der Containeranwendung abgelehnt.

Die Konfigurations-Komponente KOKO ist zudem zuständig für Änderungen der Überwachungs-Konfigurations-Information UKONF in Fällen, in welchen Containeranwendungen gestartet oder geändert oder gestoppt werden. Beispielsweise kann eine Containeranwendung gestartet oder aktualisiert werden: Die Überwachungs-Konfigurations-Information UKONF wird in solchen Fällen aktualisiert. Beispielsweise werden Referenzwerte für Netzwerkaktivitäten festgelegt oder geändert oder es werden Prüfsummen über Inhalte der Containeranwendungen ermittelt oder neu berechnet. Die Konfigurations-Komponente KOKO aktualisiert daraufhin entweder selbst die Überwachungs-Konfigurations-Information UKONF oder veranlasst die Anpassung der Überwachungs-Konfigurations-Information an die neu ermittelten oder geänderten Referenzwerte. Werden Containeranwendungen gestoppt, so werden zur entsprechenden Containeranwendung CONT1, CONT2, CONT3 zugehörige Elemente der Überwachung-Konfigurations-Information UKONF gelöscht. Zweckmäßig wird die Überwachungs-Konfigurations-Information UKONF von der Konfigurationskomponente KOKO und von den Containeranwendungen CONT1, CONT2, CONT3, denen sie übermittelt worden ist, gelöscht.

Im dargestellten Ausführungsbeispiel ist die Konfigurations-komponente KOKO infolge einer Realisierung als vertrauenswürdige Ausführungsumgebung ausgebildet, sodass Manipulationen der Konfigurationskomponente KOKO durch einen Angreifer mit entsprechenden Rechten erschwert sind und die Konfigurations-komponente KOKO grundsätzlich als vertrauenswürdig betrachtet werden kann. Die Überwachungs-Konfigurations-Information UKONF wird den Containeranwendungen CONT1, CONT2, CONT3 als Referenzinformation bereitgestellt, sodass diese jeweils eine Überwachungsfunktionalität mit einer im Folgenden beschriebenen Überwachungskomponente UEKO realisieren.

Die Überwachungskomponente UEKO ist im dargestellten Ausführungsbeispiel nicht als zentrale Komponente realisiert, sondern ist jeweils als dezentrale Überwachungskomponente UEKO der Containeranwendungen CONT1, CONT2, CONT3 selbst realisiert, die jeweils die übrigen Containeranwendungen CONT1, CONT2, CONT3, überwacht. Die Überwachungskomponenten UEKO der Containeranwendungen CONT1, CONT2, CONT3 sind ausgebildet, Überwachungsaktionen UEB in Form eines Erfassens von Aktivitäten anderer Containeranwendungen CONT1, CONT2, CONT3 und Vergleiche der erfassten Aktivitäten mit in der Überwachungs-Konfigurations-Information UKONF enthaltenen Referenzwerten auszuführen. Zudem umfassen die Überwachungsaktionen UEB einen Liveliness-Check von anderen, nicht eigens in Fig. 1 dargestellten, Containeranwendungen und Portscans auf dem Hostsystem H sowie eine Anforderung von durch andere Containeranwendungen CONT1, CONT2, CONT3 erfassten Aktivitäten von Containeranwendungen CONT1, CONT2, CONT3 und eine Attestierung von erfassten Aktivitäten von Containeranwendungen CONT1, CONT2, CONT3 an andere Überwachungskomponenten UEKO.

Wenn eine Überwachungskomponente UEKO Abweichungen der erfassten Aktivitäten einer Containeranwendung CONT1 im Vergleich zu den bereitgestellten Referenzwerten feststellt, so leitet sie Gegenmaßnahmen ein. Dazu gehören beispielsweise eine Benachrichtigung der anderen Überwachungskomponenten UEKO über die gemessene Abweichung der überwachten Containeranwendung CONT1 sowie eine Benachrichtigung einer Komponente außerhalb der Containeranwendungen CONT1, CONT2, CONT3, die weitergehende Maßnahmen, wie beispielsweise das Stoppen der überwachten Containeranwendung, ausführt.

Im dargestellten Ausführungsbeispiel wird die Überwachungs-Konfigurations-Information UKONF durch die Konfigurations-Komponente KOKO verwaltet. Jede Containeranwendung CONT1, CONT2, CONT3 weist dabei eine eigene Überwachungskomponente UEKO auf, die für die Überwachung der anderen Containeranwendung CONT1, CONT2, CONT3 auf dem Hostsystem H zuständig ist, und welche die von der Konfigurationskomponente KOKO verwaltete Überwachungs-Konfigurations-Information UKONF mittels Ladevorgängen LAE lädt. Im dargestellten Ausführungsbeispiel erfolgt die Überwachung UEB der Containeranwendungen CONT1, CONT2, CONT3 durch viele Containeranwendungen CONT1, CONT2, CONT3 gleichzeitig und nicht mehr durch eine zentrale Instanz. Das beschriebene Verfahren hat allerdings den Nachteil, dass die Überwachungs-Konfigurations-Information UKONF mit der zentralen Konfigurationskomponente KOKO selbst wieder ein zentraler Angriffspunkt für eine mögliche Manipulation ist.

In einem weiteren, nicht eigens dargestellten Ausführungsbeispiel wird die Überwachungs-Konfigurations-Information UKONF daher nicht mehr mittels einer zentralen Konfigurationskomponente KOKO verwaltet, sondern die Verwaltung erfolgt mittels der Containeranwendungen selbst. Dazu wird die aktuelle Überwachungs-Konfigurations-Information UKONF jeweils als Referenz-Information beim Starten einer Containeranwendung CONT1, CONT2, CONT3 in das jeweilige Containerimage oder in das Dateisystem der geladenen Containerinstanz eingefügt. Die Konfigurationskomponente KOKO ist in diesem Ausführungsbeispiel lediglich noch ausgebildet, beim Starten,
Ändern und Stoppen einer Containeranwendung durchzuführende Änderungen der Referenzwerte in der Überwachungs-Konfigurations-Information UKONF an alle Container zu übermitteln. Die Konfigurationskomponente KOKO überwacht dabei allenfalls noch die Konsistenz der Überwachungs-Konfigurations-Information UKONF mit den aktuell tatsächlich gestarteten Containeranwendungen CONT1, CONT2, CONT3. Dies erfolgt beispielsweise dadurch, dass der aktuelle Überwachungsprozess so lange gestoppt wird, bis die Änderungen in allen Überwachungs-Konfigurations-Informationen UNKONF der laufenden Containeranwendungen CONT1, CONT2, CONT3 durchgeführt ist. Alternativ kann ein Zeitfenster definiert sein, in welchem Überwachungskomponenten UEKO Abweichungen von Referenzwerten in der Überwachungs-Konfigurations-Information UKONF oder fehlende oder infolge gestoppter Containeranwendungen CONT1, CONT2, CONT3 obsolet gewordene Elemente der Überwachungs-Konfigurations-Information UKONF akzeptiert.

Im dargestellten Ausführungsbeispiel ist jeweils eine Überwachungskomponente UEKO in jede der Containeranwendungen CONT1, CONT2, CONT3 eingebracht. Optional kann beim Start einer neuen Containeranwendung geprüft werden, ob eine geeignete Überwachungs-Komponente UEKO im Container-Image der neunen Containeranwendung vorhanden ist. Andernfalls wird die Ausführung der neuen Containeranwendung verhindert. In dieser vorteilhaften Ausgestaltung kann sichergestellt werden, dass jede der Containeranwendungen eine Überwachungskomponente UEKO beinhaltet.

Alternativ kann in weiteren Ausführungsbeispielen jeweils beim Bau des auszuführenden Containerimages auf einem Hostsystem, oder mehreren unterschiedlichen Hostsystemen eine Überwachungskomponente UEKO in das Containerimage integriert werden.

In dazu alternativen Ausführungsbeispielen kann zu jeder Containeranwendung CONT1, CONT2, CONT3 zugeordnet ein eigenständiger Überwachungsprozess auf dem Hostsystem H gestartet werden, der seine Überwachungs-Konfigurations-Information UKONF mit den Überwachungsprozessen anderer Containeranwendungen CONT1, CONT2, CONT3 abgleicht. In diesen Ausführungsbeispielen befinden sich also die Überwachungs-Konfigurations-Informationen UKONF und die Überwachungskomponenten UEKO nicht in den Containeranwendungen CONT1, CONT2, CONT3 selbst, sondern jeweils in zu den Containeranwendungen CONT1, CONT2, CONT3 korrespondierenden Überwachungsprozessen auf dem Hostsystem H.

Die Überwachungskomponenten UEKO des dargestellten Ausführungsbeispiels, welche Bestandteile der jeweiligen Containeranwendungen CONT1, CONT2, CONT3 sind, können nicht nur weitere Containeranwendungen CONT1, CONT2, CONT3 des gleichen Herstellers überwachen, sondern auch Containeranwendungen anderer Hersteller. Hierbei kann in weiteren Ausführungsbeispielen festgelegt sein, dass keine Informationen in der Überwachungs-Konfigurations-Information UNKONF sensible Daten über die Containeranwendung selbst beinhalten. Dies kann beispielsweise durch eine im Containerimage definierte Policy realisiert sein, die der beim Starten der jeweiligen Containeranwendung des fremden Herstellers der Konfigurationskomponente KOKO bereitgestellt wird und in der beschrieben ist, welche Referenzwerte für die Überwachung UEB erlaubt sind. Die Konfigurationskomponente KOKO entscheidet dann, ob sie diese Containeranwendung starten will oder ob ein Start verboten ist, etwa weil die Policy der Containeranwendung CONT1, CONT2, CONT3 zu restriktiv ist.

Der Überwachungsprozess selbst, der durch die Überwachungskomponenten UEKO der einzelnen Containeranwendungen CONT1, CONT2, CONT3 durchgeführt wird, kann entweder unabhängig von jeder Containeranwendung CONT1, CONT2, CONT3 selbst durchgeführt werden oder die Überwachungsprozesse können einen Peerto-Peer-Mechanismus (P2P-Mechanismus) anwenden, bei dem die Containeranwendungen die erfassten Aktivitäten austauschen, um sie dann mit den Referenzwerten in der Überwachungs-Konfigurations-Information UKONF zu vergleichen.

Neben dem Vergleich von Referenzwerten in der Überwachungs-Konfigurations-Information UKONF können die Überwachungskomponenten UEKO der Containeranwendungen CONT1, CONT2, CONT3 zudem auch auf einer aktiveren Weise auffällige Aktivitäten von anderen Containeranwendungen CONT1, CONT2, CONT3 erfassen:
So können die Aktivitäten von Containeranwendungen CONT1, CONT2, CONT3 überwacht und als potenziell gefährlich eingeordnet werden, wenn diese Containeranwendungen auf einen normalen Request nicht die erwartete Antwort liefern. Das Überwachen durch die Überwachungskomponenten erstreckt sich folglich nicht allein auf eine passive Überwachung, sondern kann auch das aktive Aussenden von Requests an die überwachte Containeranwendung CONT1, CONT2, CONT3 umfassen.

Die Überwachungskomponenten UEKO können eine Überwachung UEB auch aktiv mittels dynamisierter Testfragen, d. h. Anfragenachrichten, an andere Containeranwendungen vornehmen, z.B. Informationen über interne Hashwerte oder Inhalte von bestimmten Dateien abfragen. Die erhaltenen Antworten werden beispielsweise von den Überwachungskomponenten UEKO erfasst und mit von den Überwachungskomponenten UEKO selbst berechneten Werten verglichen.

Die Überwachungskomponenten UEKO können im dargestellten Ausführungsbeispiel zudem Requests, die nicht dem normalen Verhalten entsprechen, an andere Containeranwendungen stellen. Im Erfolgsfall gibt die Überwachungskomponente UEKO dann einen Alarm.

## Patentansprüche

1. Verfahren zur Überwachung (UEB) von Containeranwendungen (CONT1, CONT2, CONT3) auf einem Hostsystem (H) auf Manipulation, bei welchem zu mindestens zweien der Containeranwendungen (CONT1, CONT2, CONT3) jeweils ein Überwachungsprozess (UEKO) auf dem Hostsystem (H) gestartet und, vorzugsweise mittels einer datentechnischen Verknüpfung, zugeordnet wird, wobei die Überwachungsprozesse (UEKO) das aktuelle Verhalten mindestens einer anderen der Containeranwendungen (CONT1, CONT2, CONT3) als der jeweils zugeordneten Containeranwendung (CONT1, CONT2, CONT3) mit einem Referenzverhalten (UKONF) der mindestens einen anderen Containeranwendung (CONT1, CONT2, CONT3) einem Vergleich unterziehen, wobei abhängig von dem Vergleich auf eine erfolgte Manipulation der dem Vergleich unterzogenen mindestens einen Containeranwendung (CONT1, CONT2, CONT3) geschlossen wird und dass dann, wenn auf eine erfolgte Manipulation der mindestens einen Containeranwendung geschlossen wird, eine Alarmmeldung oder ein Alarmsignal bereitgestellt wird und/oder eine Netzwerkkommunikation der betroffenen mindestens einen Containeranwendung und/oder des Hosts begrenzt wird und/oder der Zugriff auf eine Ein-/Ausgabeschnittstelle des Hosts durch die betroffene mindestens eine Containeranwendung gesperrt oder allgemein gesperrt wird, und/oder die betroffene mindestens eine Containeranwendung angehalten oder beendet oder neu gestartet wird und/oder ein Neustart eines Programmcodes, d. h. eines Container-Images, der betroffenen mindestens einen Containeranwendung auf dem Host gesperrt wird.

2. Verfahren nach dem vorhergehenden Anspruch, bei welchem das Referenzverhalten (UKONF) der Containeranwendung (CONT1, CONT2, CONT3) den Überwachungsprozessen (UEKO) beim Start und/oder Stopp und/oder bei einer Änderung der mindestens einen anderen Containeranwendung (CONT1, CONT2, CONT3) mitgeteilt wird.

3. Verfahren nach einem der vorhergehenden Ansprüche, bei welchem der Überwachungsprozess (UEKO) der jeweiligen Containeranwendung (CONT1, CONT2, CONT3) zugeordnet wird, indem der Überwachungsprozess (UEKO) als Teil der jeweiligen Containeranwendung (CONT1, CONT2, CONT3) gestartet wird.

4. Verfahren nach einem der vorhergehenden Ansprüche, bei welchem das aktuelle Verhalten der mindestens einen anderen Containeranwendung (CONT1, CONT2, CONT3) mit dem Referenzverhalten (UKONF) einem Vergleich hinsichtlich eines Antwortverhaltens auf eine Frage und/oder hinsichtlich eines Betriebsverhaltens und/oder hinsichtlich eines Verhaltens bei einem Manipulationsversuch und/oder bei einer erfolgten Manipulation unterzogen wird.

5. Verfahren nach einem der vorhergehenden Ansprüche, bei welchem eine Referenzverhaltenskomponente (KOKO) den Überwachungsprozessen (UEKO) das Referenzverhalten (UKONF) mitteilt.

6. Verfahren nach Anspruch 5, bei welchem die Referenzverhaltenskomponente (KOKO) kryptographisch geschützt ist.

7. Verfahren nach Anspruch 5 oder 6, bei welchem die Referenzverhaltenskomponente (KOKO) mittels einer verteilten Datenbank realisiert wird.

8. Anlage, aufweisend Containerimages für Containeranwendungen (CONT1, CONT2, CONT3) und ein Hostsystem (H), ausgebildet zur Ausführung eines Verfahrens nach einem der vorhergehenden Ansprüche.

9. Anlage nach dem vorhergehenden Anspruch, welche eine Fertigungs- (A) und/oder Bearbeitungsanlage ist.

## Claims

1. Method for monitoring (UEB) container applications (CONT1, CONT2, CONT3) on a host system (H) for manipulation, in which a monitoring process (UEKO) is started on the host system (H) for each of at least two of the container applications (CONT1, CONT2, CONT3) and is assigned, preferably by means of a data link, wherein the monitoring processes (UEKO) subject the current behaviour of at least one of the container applications (CONT1, CONT2, CONT3) other than the respective assigned container application (CONT1, CONT2, CONT3) to a comparison with a reference behaviour (UKONF) of the at least one other container application (CONT1, CONT2, CONT3), wherein
occurring manipulation of the at least one container application (CONT1, CONT2, CONT3) subjected to the comparison is concluded depending on the comparison, and, when an occurring manipulation of the at least one container application is concluded, an alarm message or an alarm signal is provided and/or network communication of the affected at least one container application and/or the host is limited and/or the access to an input/output interface of the host by the affected at least one container application is blocked or is blocked in general, and/or the affected at least one container application is stopped or ended or restarted and/or a restart of a program code, i.e. a container image, of the affected at least one container application on the host is blocked.

2. Method according to the preceding claim, in which the reference behaviour (UKONF) of the container application (CONT1, CONT2, CONT3) is communicated to the monitoring processes (UEKO) upon the start and/or stop and/or upon a change of the at least one other container application (CONT1, CONT2, CONT3).

3. Method according to one of the preceding claims, in which the monitoring process (UEKO) is assigned to the respective container application (CONT1, CONT2, CONT3) in that the monitoring process (UEKO) is started as part of the respective container application (CONT1, CONT2, CONT3).

4. Method according to one of the preceding claims, in which the current behaviour of the at least one other container application (CONT1, CONT2, CONT3) is subjected to a comparison with the reference behaviour (UKONF) with respect to a response behaviour to a question and/or with respect to an operating behaviour and/or with respect to a behaviour upon a manipulation attempt and/or upon an occurring manipulation.

5. Method according to one of the preceding claims, in which a reference behaviour component (KOKO) communicates the reference behaviour (UKONF) to the monitoring processes (UEKO).

6. Method according to Claim 5, in which the reference behaviour component (KOKO) is cryptographically protected.

7. Method according to Claim 5 or 6, in which the reference behaviour component (KOKO) is implemented by means of a distributed database.

8. System, including container images for container applications (CONT1, CONT2, CONT3) and a host system (H), designed to execute a method according to one of the preceding claims.

9. System according to the preceding claim, which is a manufacturing (A) and/or processing system.

## Revendications

1. Procédé destiné à la surveillance (UEB) d'applications de conteneur (CONT1, CONT2, CONT3) sur un système hôte (H) afin de détecter une manipulation, dans lequel un processus de surveillance (UEKO) est respectivement démarré sur le système hôte (H) et, de préférence au moyen d'une liaison informatique, est associé à au moins deux des applications de conteneur (CONT1, CONT2, CONT3), dans lequel les processus de surveillance (UEKO) soumettent le comportement actuel d'au moins une autre des applications de conteneur (CONT1, CONT2, CONT3) que l'application de conteneur (CONT1, CONT2, CONT3) respectivement associée à un comportement de référence (UKONF) de l'au moins une autre application de conteneur (CONT1, CONT2, CONT3) à une comparaison, dans lequel en fonction de la comparaison il est conclu qu'une manipulation réussie de l'au moins une application de conteneur (CONT1, CONT2, CONT3) soumise à la comparaison a été effectuée et que, ensuite, lorsqu'il est conclu à une manipulation réussie de l'au moins une application de conteneur, un message d'alarme ou un signal d'alarme est fourni et/ou une communication réseau de l'au moins une application de conteneur concernée et/ou de l'hôte concerné est limitée et/ou l'accès à une interface de réception/d'émission de l'hôte est bloqué(e) ou globalement bloqué(e) par le biais de l'au moins une application de conteneur et/ou l'au moins une application de conteneur concernée est maintenue ou terminée ou redémarrée et/ou un redémarrage d'un code de programme, à savoir d'une image de conteneur, de l'au moins une application de conteneur sur l'hôte est bloqué.

2. Procédé selon la revendication précédente, dans lequel le comportement de référence (UKONF) de l'application de conteneur (CONT1, CONT2, CONT3) est communiquée aux processus de surveillance (UEKO) lors du démarrage et/ou de l'arrêt et/ou lors d'une modification de l'au moins une autre application de conteneur (CONT1, CONT2, CONT3).

3. Procédé selon l'une quelconque des revendications précédentes, dans lequel le processus de surveillance (UEKO) est associé à l'application de conteneur (CONT1, CONT2, CONT3) respective en démarrant le processus de surveillance (UEKO) dans le cadre de l'application de conteneur (CONT1, CONT2, CONT3) respective.

4. Procédé selon l'une quelconque des revendications précédentes, dans lequel le comportement actuel de l'au moins une autre application de conteneur (CONT1, CONT2, CONT3) avec le comportement de référence (UKONF) est soumis à une comparaison en ce qui concerne un comportement de réponse à une question et/ou en ce qui concerne un comportement de fonctionnement et/ou en ce qui concerne un comportement lors d'une recherche de manipulation et/ou lors d'une manipulation réussie.

5. Procédé selon l'une quelconque des revendications précédentes, dans lequel un composant de comportement de référence (KOKO) communique le comportement de référence (UKONF) aux processus de surveillance (UEKO).

6. Procédé selon la revendication 5, dans lequel le composant de comportement de référence (KOKO) est protégé de manière cryptographique.

7. Procédé selon la revendication 5 ou 6, dans lequel le composant de référence (KOKO) est réalisé au moyen d'une base de données partagée.

8. Installation, présentant des images de conteneur pour des applications de conteneur (CONT1, CONT2, CONT3) et un système hôte (H), configuré pour l'exécution d'un procédé selon l'une quelconque des revendications précédentes.

9. Installation selon la revendication précédente, qui est une installation de production (A) et/ou de traitement.
